# EUROPÄISCHE PATENTSCHRIFT

(11) **EP 0 357 935 B1**
(45) Veröffentlichungstag und Bekanntmachung des Hinweises auf die Patenterteilung: **08.12.1993**
(21) Anmeldenummer: 89113824.0
(22) Anmeldetag: 27.07.1989
(51) Int. Cl.: F16H 25/24, B65G 33/02, B66F 9/14

(54) **Spindeltrieb für einen Teleskoptisch**
Screw actuator for telescopic tables
Transmission par vis sans fin pour table téléscopique

(30) Priorität: 06.09.1988 DE 3830254
(43) Veröffentlichungstag der Anmeldung: 14.03.1990
(73) Patentinhaber: BAUER, Dieter, Dipl.-Ing., D-81679 München (DE)
(72) Erfinder: Bauer, Dieter, Dipl.-Ing., D-8000 München 80 (DE); Kullmann, Friedemann, Dipl.-Ing., D-8000 München 82 (DE)
(74) Vertreter: Liska, Horst, Dr.-Ing.

(56) Entgegenhaltungen:
- EP-A- 0 144 478
- DE-C- 924 333
- DE-C- 2 545 010
- DE-C- 2 925 610
- GB-A- 2 078 902
- US-A- 2 778 239
- US-A- 3 293 925
- US-A- 3 779 094
- US-A- 3 818 770
- PATENT ABSTRACTS OF JAPAN, Band 8, Nr. 47 (M-280)[1484], 2. März 1984; & JP-A-58 200 848 (YOSHIO DAIKI) 22-11-1983

## Beschreibung

Die Erfindung betrifft eine einem Teleskoptisch eines Regalförderzeugs zugeordnete Schlittenanordnung mit einem ersten Bauteil und einem ausgehend von einer Mittelstellung in beiden Richtungen in je eine Ausschubstellung längsverschiebbar an dem ersten Bauteil geführten zweiten Bauteil und mit einem das zweite Bauteil antreibenden Verschiebeantrieb, dessen mit konstanter Drehzahl arbeitender Motor mit dem zweiten Bauteil über Übertragungsmittel gekuppelt ist, die das zweite Bauteil trotz konstanter Drehzahl des Motors mit über den Verschiebeweg sich ändernder Geschwindigkeit und Beschleunigung antreiben.

Es ist bekannt, die Schlittenanordnung eines Teleskoptisches eines Regalförderzeugs über einen mechanischen Unstetigkeitsantrieb so anzutreiben, daß der Teleskoptisch in einer Mittelstellung sowie in seinen beiden Ausschubstellungen bei einer Annäherung an diese Stellungen mit verringerter Endverzögerung angehalten oder mit verringerter Anfangsbeschleunigung aus diesen Stellungen herausbewegt wird. So ist aus der DE-C-25 45 010 ein Unstetigkeitsantrieb für den Schlitten eines Teleskoptisches bekannt, bei welchem zwei Mitnehmer, die im Abstand voneinander mit einer Endloskette umlaufen, während der Scheitelpunkte der Umlenkbewegung der Kette in kulissenartige Führungen des Teleskoptisches eingreifen bzw. aus den Führungen austreten, so daß der Teleskoptisch zwischen den Scheitelpunkten von den Mitnehmern mitgenommen wird. Aus der DE-C-29 25 610 ist ein weiterer Unstetigkeitsantrieb bekannt, bei welchem der Teleskoptisch mit einer Endloskette gekuppelt ist, die in der Mittelstellung und den beiden Ausschubstellungen des Teleskoptisches über Umlenkräder quer zur Verschieberichtung gelenkt wird, wodurch die Vorschubgeschwindigkeit des Teleskoptisches in diesen Stellungen bis auf Stillstand verringert wird.

Aus EP-A-0 144 478 ist es bekannt, Gegenstände in gleichbleibender Richtung mittels einer Fördereinrichtung einer Arbeitsstation zuzuführen bzw. sie aus der Arbeitsstation abzutransportieren. Die Fördereinrichtung umfaßt längs einer Gewindespindel fahrbare Mitnehmerschlitten, die mit Mitnehmern in Schraubennuten der Gewindespindel eingreifen. Mit den Mitnehmerschlitten sind Transportplattformen für die zu bearbeitenden Gegenstände, hier Kraftfahrzeugkomponenten, kuppelbar. Da die Gewindespindel in mehrere unabhängig voneinander angetriebene Segmente unterteilt ist, sind die Mitnehmerschlitten mit Teleskoptischen versehen, die die Transportplattform von einem Segment zum nächsten übergeben. Um die Transportgeschwindigkeit in Zwischenabschnitten zu erhöhen, ist es aus EP-A-0 144 478 ferner bekannt, die Steigung der Gewindespindel in einem Mittelbereich größer zu wählen als in Endbereichen. Der Teleskoptisch des Mitnehmerschlittens wird durch ein Zahnstangengetriebe mit gleichbleibender Übersetzung angetrieben.

Aus JP-A-58-200 848 ist ein Spindelantrieb für Paletten bekannt, die längs der Spindel indexiert angehalten werden sollen. Die Gewindespindel ist in den Anhaltestellungen mit Rastbereichen versehen, in welchen die Steigung null ist.

Der Erfindung liegt die Aufgabe zugrunde, einen Weg zu zeigen, wie die Schlittenanordnung des Teleskoptisches eines Regalförderzeugs mit geringem Konstruktionsteileaufwand und insbesondere einem einfach steuerbaren Motor ruckfrei zwischen einer Mittelstellung und zwei Ausschubstellungen, in welchen sie angehalten wird, bewegt werden kann.

Ausgehend von der eingangs erläuterten Schlittenanordnung wird diese Aufgabe erfindungsgemäß dadurch gelöst, daß die Übertragungsmittel eine von dem Motor rotierend angetriebene, an dem ersten Bauteil gelagerte Gewindespindel mit wenigstens einer Schraubennut sowie mindestens einem in jede Schraubennut mit mindestens einem Nutstein eingreifenden Mitnehmer an dem zweiten Bauteil aufweisen, daß jede Schraubennut zwei Abschnitte umfaßt, deren Steigung sich längs der Gewindespindel symmetrisch zur Mittelstellung ändert und die in der Mittelstellung ineinander übergehen, und daß jede Schraubennut in der Mittelstellung und den beiden Ausschubstellungen Rastbereiche mit einer zumindest angenähert null betragenden Steigung bildet.

Durch die Anwendung solcher Übertragungsmittel eines Verschiebeantriebs bei Teleskoptischen von Förderzeugen kann ein dem Anwendungszweck angepaßter Verlauf von Geschwindigkeit und Beschleunigung über dem Verschiebeweg erreicht werden, trotz Anwendung konstant drehender Antriebe.

Vorteilhafte Weiterbildungen können den Unteransprüchen 2 und 3 entnommen werden.

Ein Ausführungsbeispiel der Erfindung ist in Zeichnungen dargestellt. Es zeigen:
- Fig. 1: schematisch eine Seitenansicht eines Spindeltriebes mit einem Drehantrieb, einer Spindel und einem dieser gegenüber verschiebbaren, mit einem Maschinenschlitten gekoppelten Abtriebselement;
- Fig. 2: in vergrößerter Darstellung eine Spindel gem. Fig. 1;
- Fig. 3: einen Schnitt III-III aus Fig. 1;
- Fig. 4: einen Schnitt IV-IV aus Fig. 3.

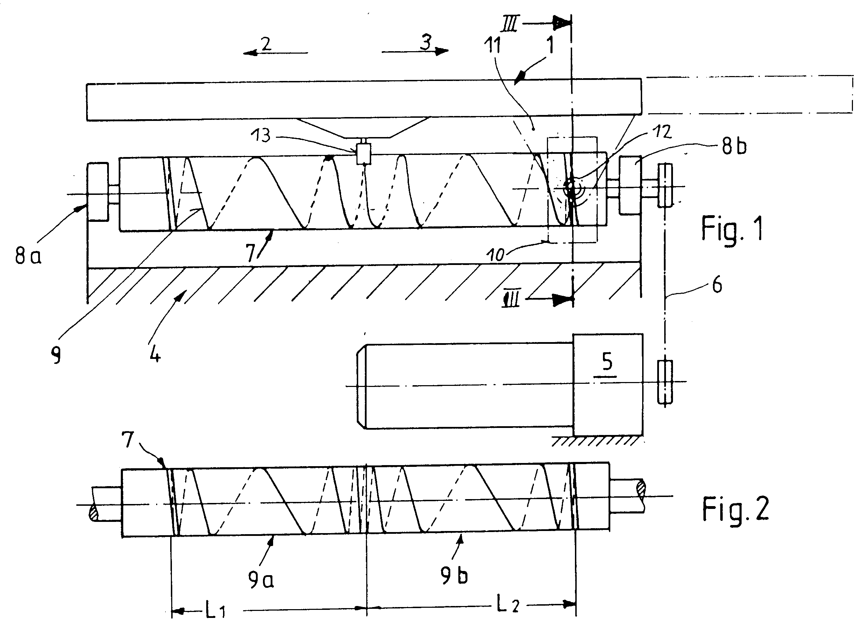

Ein in Fig. 1 dargestelltes zweites Bauteil 1, welches als Maschinenschlitten ausgeführt sein kann, ist von einer dargestellten Mittelstellung aus in Richtungen 2 bzw. 3 geradlinig gegenüber einem ersten Bauteil 4 verschiebbar gelagert. Ein Verschiebeantrieb umfaßt einen Drehantrieb 5, beispielsweise einen Elektromotor und eine mit dem Drehantrieb 5 über Übertragungsmittel 6 drehverbundene Spindel 7. Die Spindel 7 erstreckt sich in die Richtungen 4, 6, in die das zweite Bauteil 1 verschiebbar ist.

Die Spindel 7 ist an ihren beiden Enden über Lager 8a und 8b drehbar am ersten Bauteil 4 gelagert.

In eine Mantelfläche der Spindel 7 ist eine Schraubennut 9 eingearbeitet, die in Fig. 1 nur als einzelne Linie dargestellt ist, die aber selbstverständlich eine bestimmte Nutbreite aufweist.

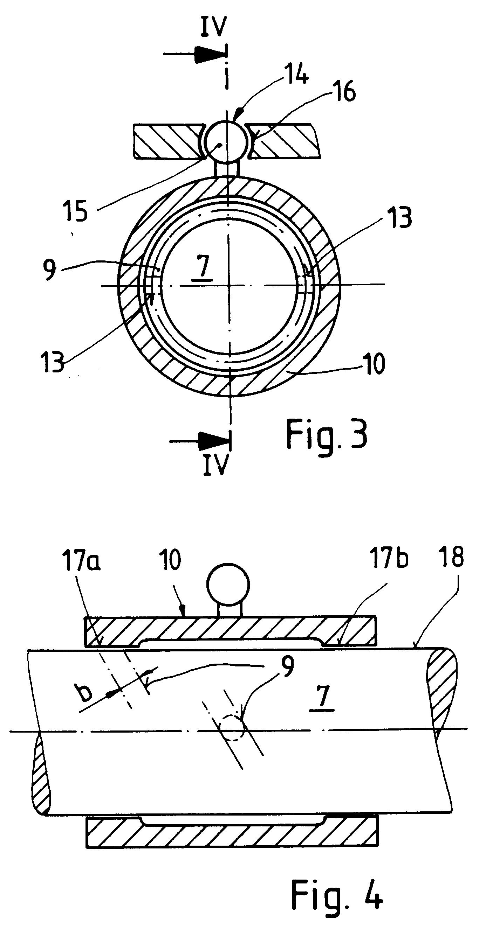

Das Abtriebselement ist ein in die Spindel mit eingreifender, am Bauteil 1 befestigter Nutenstein 13 oder wird durch eine konzentrisch zur Spindel 7 angeordnete Hülse 10 gebildet, an deren Innenumfang wenigstens ein in die Schraubennut 9 eingreifender Nutenstein 13 (Fig. 3) oder dergleichen angeordnet ist. Die Hülse 10 ist mit dem zweiten Bauteil 1 verbunden, so daß sie sich selbst nicht um die Längsachse der Spindel 7 drehen kann. Bei einer Drehung der Spindel 7 wird die Hülse 10 längs der Spindel 7 verschoben und nimmt das mit der Hülse 10 verbundene zweite Bauteil 1 mit, wie in Fig. 1 durch strichpunktierte Linien dargestellt ist.

Wie Fig. 1 weiter erkennen läßt, sind am zweiten Bauteil 1 nach unten ragende Laschen 11 angeordnet (von denen nur die dem Betrachter zugewandte Lasche zu sehen ist), die die Hülse 10 beidseitig übergreifen. Zwei an der Hülse 10 angeordnete, seitlich abstehende Zapfen 12 greifen jeweils in eine an jeder Lasche 11 ausgebildete Bohrung ein.

Fig. 2 zeigt die Spindel 7 gemäß Fig. 1 in vergrößerter Darstellung. Über die Gesamtlänge der Spindel 7 sind zwei gleiche Verstellbereiche L₁, L₂ angeordnet, die den Verstellbereichen L₁, L₂ jeweils zugeordneten Schraubennutabschnitte 9a, 9b sind i.A. zur Mittellinie symmetrisch ausgebildet; sie gehen im Bereich dieser Mittellinie ineinander über.

Fig. 3 zeigt einen Querschnitt III-III durch die Spindel 7 und eine diese umgebende Hülse 10. An der Innenseite der Hülse 10 sind Nutensteine 13 angeordnet, die in die Schraubennut 18 der Spindel 7 eingreifen. An der Hülse 10 ist ein Mitnehmer 14 angeordnet, welcher an seinem äußeren Ende in eine Kugel 15 eingreift, in welcher er längs seiner Achse gleiten kann.

Die Kugel 15 greift in eine nach Art einer Kugelpfanne ausgebildete Öffnung 16 an einer Unterseite des Maschinenschlittens (zweites Bauteil 1) ein und stellt auf diese Weise die Mitnehmerverbindung zwischen der Hülse 10 und dem Maschinenschlitten. Der als Kugelgelenk ausgebildete Mitnehmer 14 ermöglicht eine Winkelbewegung zwischen der Hülse 10 und dem Maschinenschlitten und die Zapfenführungen in der Kugel ermöglichen eine Verschiebebewegung der Hülse gegen die Kugel, so daß beispielsweise bei ungenauer Parallelität der Spindel 7 einerseits und der Schlittenführung andererseits Verspannungen vermieden werden.

Fig. 4 zeigt einen Längsschnitt IV-IV in Fig. 3. Die Hülse 10 weist jeweils am vorderen und hinteren Ende eine auf der Spindel 7 aufliegende Innenschulter 17a, 17b auf. Wie erkennbar ist, ist die axiale Länge jeder Innenschulter 17a, 17b länger als die Breite b der Schraubennut 9, so daß die Innenschulter jeweils auf einer äußeren Mantelfläche 18 der Spindel 7 aufliegt und nicht in die Schraubennut 9 eingreifen kann.

Ein Spindeltrieb dieser Art kann durch Austausch der Spindel 7 gegen eine Spindel mit anderer Geometrie der Schraubennut 9 jeden gewünschten Verlauf der Geschwindigkeit über dem Weg und der daraus resultierenden Beschleunigung angepaßt werden.

## Patentansprüche

1. Einem Teleskoptisch eines Regalförderzeugs zugeordnete Schlittenanordnung, mit einem ersten Bauteil (4) und einem ausgehend von einer Mittelstellung in beiden Richtungen in je eine Ausschubstellung längsverschiebbar an dem ersten Bauteil (4) geführten, zweiten Bauteil (1) und mit einem das zweite Bauteil (1) antreibenden Verschiebeantrieb (5, 6, 7, 13), dessen mit konstanter Drehzahl arbeitender Motor (5) mit dem zweiten Bauteil (1) über Übertragungsmittel (6, 7, 13) gekuppelt ist, die das zweite Bauteil (1) trotz konstanter Drehzahl des Motors (5) mit über dem Verschiebeweg sich ändernder Geschwindigkeit und Beschleunigung antreiben,
**dadurch gekennzeichnet,**
daß die Übertragungsmittel (6, 7, 13) eine von dem Motor (5) rotierend angetriebene, an dem ersten Bauteil (4) gelagerte Gewindespindel (7) mit wenigstens einer Schraubennut (9) sowie mindestens einem in jede Schraubennut (9) mit mindestens einem Nutstein eingreifenden Mitnehmer (13) an dem zweiten Bauteil (1) aufweisen,
daß jede Schraubennut (9) zwei Abschnitte (9a, 9b) umfaßt, deren Steigung sich längs der Gewindespindel (7) symmemtrisch zur Mittelstellung ändert und die in der Mittelstellung ineinander übergehen und daß jede Schraubennut (9) in der Mittelstellung und den beiden Ausschubstellungen Rastbereiche mit einer zumindest angenähert Null betragenden Steigung bildet.

2. Schlittenanordnung nach Anspruch 1,
**dadurch gekennzeichnet,**
daß der Mitnehmer (13) auf der Innenseite einer die Gewindespindel (7) umgebenden Hülse (10) angeordnet ist, die mit dem zweiten Bauteil (1) über ein Kugelgelenk (15, 16) verbunden ist.

3. Schlittenanordnung nach Anspruch 1 oder 2,
**dadurch gekennzeichnet,**
daß der Mitnehmer (13) auf der Innenseite einer die Gewindespindel umgebenden Hülse (10) angeordnet ist, die an wenigstens einem ihrer Enden eine auf der Gewindespindel (7) aufliegende Innenschulter (17a, 17b) aufweist, deren axiale Länge größer ist als die Breite der Schraubennut (9).

## Claims

1. A slide assembly associated with a telescopic table of a rack conveyor, having a first component (4) and a second component (1) guided longitudinally displaceably on the first component (4) starting from a central position in both directions into a respective displaced position, and for driving the second component (1) a shifting drive (5, 6, 7, 13) of which the motor (5) operates at a constant speed of rotation and is coupled to the second component (1) via transmission means (6, 7, 13) which drive the second component (1), despite the constant speed of rotation of the motor (5), at a speed and acceleration which varies over the shift travel, characterised in that the transmission means (6, 7, 13) have a threaded spindle (7), which is rotated by the motor (5) and which is mounted on the first component (4), having at least one helical groove (9) and at least one entrainment means (13) on the second component (1) engaging in each helical groove (9) with at least one groove block, in that each helical groove (9) comprises two portions (9a, 9b) whose pitch varies along the threaded spindle (7) symmetrically to the central position and which merge into one another in the central position, and in that in the central position and the two displaced positions each helical groove (9) forms locking zones with a pitch amounting at least approximately to zero.

2. A slide assembly according to Claim 1,
characterised in that the entrainment means (13) is disposed on the inside of a collar (10) which surrounds the threaded spindle (7) and which is connected with the second component (1) via a ball-and-socket joint (15, 16).

3. A slide assembly according to Claim 1 or 2,
characterised in that the entrainment means (13) is disposed on the inside of a collar (10) which surrounds the threaded spindle and which at at least one of its ends has an inner shoulder (17a, 17b) which is supported on the threaded spindle (7) and has an axial length greater than the width of the helical groove (9).

## Revendications

1. Dispositif de chariot associé à une table téléscopique d'un transtockeur, comportant un premier composant (4) et un deuxième composant (1) monté et guidé sur le premier composant (4) et pouvant coulisser longitudinalement, à partir d'une position médiane, dans les deux sens, pour se mettre dans respectivement une position sortie, et comportant un entraînement en coulissement (5, 6, 7, 13) entraînant le deuxième composant (1), dont le moteur (5), fonctionnant avec une vitesse de rotation constante, est couplé au deuxième composant (1) par des moyens de transmission (6, 7, 13) qui entraînent le deuxième composant (1), malgré la vitesse de rotation constante du moteur (5), avec une vitesse et une accélération qui se modifient sur la course de coulissement, caractérisé en ce que les moyens de transmission (6, 7, 13) présentent une tige filetée (7) montée sur le premier composant (4) et entraînée en rotation par le moteur (5), comportant au moins une cannelure hélicoïdale (9) ainsi qu'au moins un organe d'entraînement (13), formé sur le deuxième composant (1) et coopérant, par au moins une partie, avec chaque cannelure hélicoïdale (9), en ce que chaque cannelure hélicoïdale (9) comprend deux parties (9a, 9b), dont les pas varient, le long de la tige filetée (7), de façon symétrique par rapport à la position médiane et qui se raccordent dans la position médiane, et en ce que chaque cannelure hélicoïdale (9) forme, dans la position médiane et dans les deux positions sorties, des zones d'arrêt présentant un pas d'une valeur nulle ou au moins approximativement nulle.

2. Dispositif de chariot selon la revendication 1, caractérisé en ce que l'organe d'entraînement (13) est disposé sur la face intérieure d'une douille (10) entourant la tige filetée (7), qui est reliée au deuxième composant (1) par l'intermédiaire d'un joint à rotule (15, 16)

3. Dispositif de chariot selon la revendication 1 ou 2, caractérisé en ce que l'organe d'entraînement (13) est disposé sur la face intérieure d'une douille (10) entourant la tige filetée (7), qui présente, au moins sur une de ses extrémités, un épaulement intérieur (17a, 17b) reposant sur la tige filetée (7), dont la longueur axiale est plus importante que la largeur de la cannelure hélicoïdale (9).
